# EUROPÄISCHE PATENTSCHRIFT

(11) **EP 2 749 008 B1**
(45) Veröffentlichungstag und Bekanntmachung des Hinweises auf die Patenterteilung: **16.03.2016**
(21) Anmeldenummer: 12759352.3
(22) Anmeldetag: 19.08.2012
(51) Int. Cl.: H04W 4/00, H04W 4/20, G08B 1/08, H04W 4/02, H04L 29/08

(54) **KOMMUNIKATIONSSYSTEM MIT MINDESTENS ZWEI MOBILTEILEN**
COMMUNICATION SYSTEM WITH AT LEAST TWO MOBILE PARTS
SYSTÈME DE COMMUNICATION DOTÉ AU MOINS DE DEUX PARTIES MOBILES

(30) Priorität: 22.08.2011 DE 102011052893
(43) Veröffentlichungstag der Anmeldung: 02.07.2014
(73) Patentinhaber: Vomweg, Toni Werner, 56566 Neuwied (DE)
(72) Erfinder: MARMITT, Gerd, 66620 Nonnweiler (DE); VOMWEG, Toni, Werner, 56566 Neuwied (DE)
(74) Vertreter: Müller, Jochen
(86) Internationale Anmeldenummer: PCT/DE2012/100241
(87) Internationale Veröffentlichungsnummer: WO 2013/026448

(56) Entgegenhaltungen:
- DE-A1- 19 929 186
- DE-A1-102009 023 902
- DE-C1- 19 638 820
- US-A1- 2004 046 656

## Beschreibung

Die Erfindung bezieht sich auf ein Kommunikationssystem mit mindestens zwei Mobilteilen, denen zur unmittelbaren Kommunikation miteinander jeweils eine Sende- und Empfangseinheit zugeordnet ist, die mit einem Rechner und mit einer Speichereinheit kommuniziert, in der mindestens zwei individuell zu erstellende Persönlichkeitsprofile hinterlegbar sind, von denen jeweils ein erstes Persönlichkeitsprofil, das einem eine Person beschreibenden ersten Wunschprofil des Benutzers des jeweiligen Mobilteils entspricht, gesendet und ein weiteres Persönlichkeitsprofil, das einem eine Person beschreibenden Wunschprofil des Benutzers eines weiteren Mobilteils entspricht, empfangen wird, wobei das jeweils empfangene Wunschprofil mit einem Persönlichkeitsprofil, das einem den Benutzer des jeweiligen Mobilteils beschreibenden Selbstprofil entspricht, verglichen wird und bei einer Übereinstimmung von empfangenem Wunschprofil mit dem gespeicherten Selbstprofil eine eindeutig identifizierbare Signalisierung zwischen den entsprechenden Mobilteilen erfolgt, wobei eine selbsttätige Kommunikation der Mobilteile ohne Benutzerinteraktion allein aufgrund der Ausgestaltung der Sende- und Empfangseinheiten und/oder übertragener Daten erfolgt, sowie ein Mobilteil zur Verwendung in einem Kommunikationssystem.

Ein derartiges Kommunikationssystem ist aus der DE 199 29 186 A1 bekannt.

Kommunikationssysteme sind aus der Praxis mannigfaltig bekannt. Beispielsweise kommunizieren mobile Telefone, sogenannte Handys, auf Anforderung durch einen jeweiligen Benutzer miteinander, insbesondere zum Datenaustausch.

Die DE 10 2005 045532 A1 und die DE 103 57 305 A1 beschreiben jeweils im Wesentlichen Softwareprodukte, die eine der Erfindung sehr ähnliche Funktion aufweisen, wobei Funk-Funktionen, insbesondere die sogenannte Bluetooth-Funktion, eines mobilen Gerätes verwendet wird. Der Gründgedanke einer reinen Software-Lösung ist mit einem verhältnismäßig geringen Aufwand verbunden, scheitert jedoch in der Praxis am fehlenden Zugriff auf die Bluetooth-Schnittstelle, respektive irgendeiner Funkschnittstelle eines mobilen Telefons. Die Bluetooth-Schnittstelle ist als Industriestandard definiert und wird über so genannte "Low-Level-Treiber" vom Betriebssystem, beispielsweise eines Smartphones oder einer Spielkonsole oder dergleichen, verwaltet. Möchten sich zwei Geräte miteinander unterhalten, müssen sie beim ersten Mal den sogenannten Bluetooth-Pairing-Prozess durchlaufen. Ergebnis dieses Prozesses ist ein Verbindungsschlüssel, der in der Regel durch manuelle Interaktion und somit durch Akzeptieren der Nutzer auf beiden Seiten, generiert und für die weitere Verwendung in einer Tabelle der miteinander kommunizierenden Geräte gespeichert wird. Speichern die Geräte den Schlüssel, brauchen sie bei erneuter Kontaktaufnahme den Pairing-Vorgang nicht noch einmal zu durchlaufen. Dieser Prozess ist beispielsweise in der Praxis von der Kopplung eines Mobiltelefons mit einem Auto-Telefon oder einer Freisprecheinrichtung mit dem Mobiltelefon bekannt. Eine Software in einer Hochsprache wie Java, wie sie in den oben genannten Dokumenten beschrieben wird, könnte über standardmäßig zur Verfügung stehende Funktionen und Prozeduren des Betriebssystems erst dann auf eine Verbindung mit dem anderen zweiten Gerät zugreifen, wenn der Pairing-Prozess, der vom Betriebssystem verwaltet wird, abgeschlossen wäre. Einen direkten Zugriff und somit eine "missbräuchliche" Verwendung der Bluetooth-Schnittstelle, bzw. der Funkschnittstelle, beispielsweise GSM, oder LAN-Schnittstelle, zur Übertragung von Profildaten oder auch von anderen wesentlichen Merkmalen, wie beispielsweise der Messung einer Signalstärke zur Ermittlung des Aktivierungsabstandes oder gar individuelle Einstellungen der Reichweite eines Funksuchradius, können auf normalen Wegen nicht erreicht werden. Die vorbekannten Softwareprodukte können letztlich nur dann entwickelt werden, wenn herstellerseitig ein Zugriff auf die Treiberschnittstelle gestattet würde. Eine herstellerübergreifende Funktionalität stellt sich in der Praxis als problematisch dar.

Die US 2010/0069058 A1 hat diese Limitierung erkannt und versucht erst gar nicht, die verschiedenen Geräte direkt miteinander in Kontakt treten zu lassen. Hier wird eine Umgehung der Problematik eingerichtet, in dem sich die Geräte jeweils einzeln mittels der darauf geschriebenen Software mit einem Social-Network, beispielsweise Facebook, verbinden. Verfügen die Geräte über GPS, kann der dafür geschriebene Serverdienst, der im Social-Network lokalisiert wird, feststellen, ob sich die Geräte in räumlicher Nähe zueinander befinden. Anschließend wird über diesen Dienst ein Kommunikationskanal etabliert. Mit diesem Lösungsweg verbunden sind jedoch die in Kauf zunehmenden Latenzen für die Ortsbestimmung und die Kommunikation mit dem Zentralserver sowie die systembedingte Ungenauigkeit der Ortsbestimmung durch GPS.

Die vorliegende Erfindung soll beispielsweise bei der Suche nach Partnern hilfreich sein, die gemeinsame Merkmale aufweisen. Unzählige Ratgeber, Online-Portale, Dating-Agenturen und Dating-Veranstaltungen zeigen, dass viele Menschen ein immanentes Interesse daran haben, den richtigen Partner für das Leben zu finden. Bei den bekannten Ansätzen ist die Suche nach einem Partner oftmals zeitlichen und örtlichen Beschränkungen unterworfen. Beispielsweise kann nur innerhalb einer Dating-Veranstaltung nach einem passenden Partner gesucht werden bzw. nur innerhalb des Forums eines Online-Portals. Andere naheliegende Ansätze, wie beispielsweise gesonderte Kleidungsstücke für die Partnersuche, sind dagegen oftmals nur für extrovertierte Menschen geeignet.

Es ist Aufgabe der Erfindung, ein Kommunikationssystem der eingangs genannten Art zu schaffen, mit dem die zuvor aufgezeigten Limitierungen umgangen werden können, wobei zur unmittelbaren drahtlosen Kommunikation zwischen zwei Mobilteilen kein vorgeschalteter Pairing-Prozess oder dergleichen zur erstmaligen Verbindungsaufnahme zwischen den Mobilteilen erfolgen muss.

Erfindungsgemäß wird die Aufgabe dadurch gelöst, dass bei einer Übereinstimmung des empfangenen Wunschprofils mit dem gespeicherten Selbstprofil das erkennende erste Mobilteil das empfangene Wunschprofil gemeinsam mit einer Signatur, die das gesendete Wunschprofil des zweiten Mobilteils und das Wunschprofil des ersten Mobilteils umfasst, mit seiner Sende- und Empfangseinheit sendet, wobei das weitere zweite Mobilteil Mittel umfasst, um das empfangene eigene Wunschprofil mit dem gespeicherten Wunschprofil zu vergleichen, bei einer Übereinstimmung das empfangene Wunschprofil von dem ersten Mobilteil mit dem gespeicherten zweiten Selbstprofil zu vergleichen und in Abhängigkeit von dem Vergleich mit dem ersten Mobilteil eindeutig kommuniziert oder keine Antwort an das erste Mobilteil sendet, wobei das Selbstprofil nicht durch die Sende- und Empfangseinheit an ein anderes Mobilteil übertragbar ist.

Die Unteransprüche stellen vorteilhafte Ausgestaltungen der Erfindung dar.

Ein im Rahmen der Erfindung eingesetztes Mobilteil benötigt im Gegensatz zu einem mobilen Telefon bzw. Smartphone weder zwingend ein GSM-Modul noch ein Display oder eine Tastatur als Eingabeeinheit, es kann eigenständig verwendet oder ein Smartphone kann mit dem Mobilteil ausgestattet werden.

Mit dem Persönlichkeitsprofil kann der Benutzer des Mobilteils sowohl ein Persönlichkeitsprofil, das ihn beschreibt, also ein Selbstprofil, als auch ein seinen Wunschpartner beschreibendes Persönlichkeitsprofil, nämlich ein Wunschprofil, erstellen und abspeichern. Das im Rahmen der Erfindung verwendete Persönlichkeitsprofil kann beispielsweise Angaben zum Geschlecht, also männlich oder weiblich, dem Alter, beispielsweise als Angabe eines Zahlenbereichs, der Größe, ebenfalls bevorzugt als Angabe eines Zahlenbereichs, dem Sternzeichen, insbesondere als Auswahl von einem oder zwei bevorzugten Tierkreiszeichen, einer Postleitzahl oder einem Postleitzahlenbereich, des Schulabschlusses/ Bildungsniveaus, des Einkommens, beispielsweise als Angabe eines Zahlenbereiches, dem Ziel einer Beziehungssuche, beispielsweise als Auswahl der Kategorien "Flirt", "Beziehung", "Kinderwunsch" oder ähnlich, umfassen. Die vorstehenden Angaben sind beispielhaft zu verstehen und können sowohl beschränkt als auch durch zusätzliche Merkmale erweitert werden. Bei der Sende- und Empfangseinheit handelt es sich nicht um eine üblicherweise in einem Smartphone verwendete Schnittstelle, auf die herstellerseitig ein Zugriff freigegeben werden muss. Die Sende- und Empfangseinheit kann als separates Bauteil in einem Smartphone, insbesondere auswechselbar, installiert werden und nutzt dabei einen Kartenleser, beispielsweise SD oder microSD, des Smartphones oder eine weitere Schnittstelle, beispielsweise USB oder microUSB, die für Dritte frei verfügbar und ansprechbar ist. Der Sende- und Empfangseinheit kann bauteilseitig eine Antenne, ein Mikro-Controller und eine Speichereinheit zugeordnet sein, wobei die eigentliche zentrale Rechnereinheit und die Spannungsversorgung beispielsweise dem Smartphone zugeordnet sein kann. Denkbar ist aber auch ein autarkes Mobilteil, welches selbst über eine Spannungsquelle und Anzeigeeinrichtung verfügt oder mit einer externen Spannungsquelle und/oder einer Anzeigeeinrichtung zu verbinden ist, das über eigene Schnittstellen mit einem Personal Computer oder einem Laptop oder dergleichen temporär verbunden werden kann, um beispielsweise verhältnismäßig leicht programmiert zu werden. Vorliegend wird der Begriff Kommunikationssystem für die mindestens zwei Mobilteile umfassende Einrichtung verwendet, die selbstverständlich auch als eine Kommunikationsvorrichtung bezeichnet werden kann.

Das Mobilteil sendet das den Wunschpartner beschreibende Persönlichkeitsprofil und empfängt Wunschpartner beschreibende Persönlichkeitsprofile anderer Mobilteile. Hierbei verwenden die Mobilteile, deren Anzahl beliebig sein kann, insbesondere eine gemeinsame Funkfrequenz und das Senden und Empfangen erfolgt versetzt zueinander in bestimmten Zeitabständen, wobei sich die Zeitabstände, beispielsweise zufällig, ändern, damit nicht stets zwei Mobilteile zu einem bestimmten Zeitpunkt senden oder empfangen und damit die Wahrnehmung der Signale des jeweils anderen Mobilteils ausgeschlossen ist. Die empfangenen Persönlichkeitsprofile, mit denen Benutzer weiterer Mobilteile die Wunschpartner beschreiben, die sie gerne kennenlernen möchten, werden mit dem in dem eigenen Mobilteil hinterlegten Persönlichkeitsprofil, das den Benutzer des Mobilteils beschreibende Selbstprofil, verglichen. Bei einer Übereinstimmung des empfangenen Wunschprofils mit dem gespeicherten Selbstprofil erfolgt eine eindeutig identifizierbare Signalisierung zwischen den entsprechenden Mobilteilen. Fortan kommunizieren die beiden Mobilteile mit einer eindeutig identifizierbaren Signatur untereinander, solange sie in Reichweite zueinander sind. Ein vorheriges "Kennenlernen" der Mobilteile ist nicht erforderlich, insbesondere kein durch manuelle Interaktion zu akzeptierender Austausch von Verbindungsschlüsseln, wie beispielsweise beim Pairing Prozess des Bluetooth-Standards. Dies würde nicht das Kennenlernen neuer Personen unterstützen, sondern nur das Auffinden bekannter Personen. Die Kommunikationsvorrichtung bzw. das Kommunikationssystem unterstützt die Nutzer der Mobilteile bei der Ortung und räumlichen Annäherung, wenn durch den Kommunikationsprozess festgestellt wird, dass die Profile zueinander passen, so dass letztendlich eine reale Kontaktaufnahme möglich ist.

Dadurch, dass die von dem zuerst erkennenden Mobilteil gesendete Kennung das empfangene Wunschprofil mitsendet, kann das weitere Mobilteil nach einem Vergleich des empfangenen Wunschprofils mit dem gespeicherten Wunschprofil zunächst feststellen, dass es der richtige Ansprechpartner ist. Wenn das weitere Mobilteil in einem weiteren Vergleich des Wunschprofils des sendenden Mobilteils mit seinem Selbstprofil eine Übereinstimmung feststellt, wird eine Datensignatur erstellt und gesendet, die im Wesentlichen die Bedeutung hat, dass die beiderseitigen Persönlichkeitsprofile zusammenpassen.

Diese Datensignatur besteht beispielsweise aus den beiden Wunschprofilen der Mobilteile sowie einer zufällig generierten Zahl, sodass die gesamte Datensignatur eine möglichst einmalige Signatur darstellt, damit das erste Mobilteil und das zweite Mobilteil anhand der Datensignatur die folgenden Kommunikationen eindeutig erkennen.

Das Selbstprofil dient nur zum Vergleich mit einem empfangenen Wunschprofil und ist nicht durch die Sende- und Empfangseinheit an ein anderes Mobilteil übertragbar. Da das Selbstprofil üblicherweise nicht oder nur nach einer Freigabe durch den Benutzer gesendet wird, besteht ein relativer Schutz für den Benutzer.

Zur Beschränkung des Kommunikationssystems ist zweckmäßigerweise die Sende- und Empfangseinheit ein- und ausschaltbar ausgestaltet und sendet und empfängt, insbesondere auf einer Radiofrequenz im Nahbereich, beispielsweise als Gerät mit geringer Sendeleistung in einem lizenzfreien Frequenzband als Kurzstreckenfunk (Short Range Devices, SRD). Der Benutzer kann durch die Ein-/Ausschaltung der Sende- und Empfangseinheit und/oder des gesamten Mobilteils entscheiden, ob er bzw. sein Mobilteil mit anderen Mobilteilen kommunizieren möchte oder nicht.

Unter dem Nahbereich ist eine Entfernung zwischen zwei Mobilteilen insbesondere zwischen 0,1 m und 500 m, bevorzugt zwischen 0,1 m und 100 m, vorzugsweise zwischen 0,1 m und 30 m zu verstehen. Die genaue Reichweite kann von der Ausgestaltung des Mobilteils, insbesondere der Antenne abhängen, und unterschiedlich sein. Durch die Beschränkung der Reichweite ist sichergestellt, dass die Benutzer von zwei miteinander Daten austauschenden Mobilteilen sich in räumlicher Nähe befinden, sodass sie zueinanderfinden können, wenn ihre jeweiligen Persönlichkeitsprofile übereinstimmen.

Nach einer Weiterbildung ist das Mobilteil als eine Datenkarte ausgebildet, die die Sende- und Empfangseinheit und/oder eine Antenne und/oder einen Mikro-Controller umfasst, wobei die Datenkarte in einen Kartenleser, insbesondere eines Smartphones, aber auch eines Tablet-Computers oder eines Laptops, einsetzbar ist, der zumindest mit einem Akku zur Spannungsversorgung, und/oder einem zentralen Hauptrechner gekoppelt ist. Bei der Datenkarte kann es sich um eine sogenannte SD-Karte oder dergleichen handeln, die Kontakte aufweist, die mit Gegenkontakten des mit einem Rechner verbundenen Kartenlesegerätes zusammenwirken. Die zum Betrieb des Mobilteils erforderliche Software kann bei Anordnung eines entsprechenden Rechnerbausteins auf der Datenkarte selbst ablaufen und verwaltet dann den gesamten Kommunikationsprozess der Sende- und Empfangseinheit und übergibt die Ergebnisse der Kommunikation in geeigneter Art und Weise über die Schnittstelle, insbesondere den Kartenleser, indem hier beispielsweise eine normale Speicherkarte emuliert wird. Eine weitere Software unter Nutzung des Betriebssystems sowie des Zentralrechners auf einem den Kartenleser umfassenden Smartphone, Tablett, Laptop, oder dergleichen Kommunikationsgerät, kann dann über Standardprozeduren des Betriebssystems mit der, beispielsweise als Kartenleser ausgebildeten Schnittstelle, kommunizieren, beispielsweise über Lese- und Schreibprozeduren in Dateien auf der emulierten Speicherkarte, sodass die auf dem Zentralrechner laufende Software beispielsweise das Display, die Tastatur und/oder andere Signalgeber des Smartphones, Tabletts, Laptops oder dergleichen Kommunikationsgerät für die Signalgebung im Falle einer passenden Profilkombination und/oder Ausgabe der Distanzmessung genutzt werden können. Eine solche auf dem Zentralrechner des Smartphones, Tabletts, Laptops oder dergleichen Kommunikationsgerät laufende Software kann dann auch zur Eingabe und Anpassung der Profile, sowie zum Ausschalten bzw. Einschalten der Sendeund Empfangseinheit genutzt werden. Die dort laufende Software kann Zusatzfunktionen aufweisen, wie beispielsweise die Anzeige des Standortes des Kommunikationspartners mit dem passenden Profil im Raum oder in einem Diagramm.

Wenn die beiden Mobilteile Daten miteinander austauschen, also die Übereinstimmung der beiderseitigen Persönlichkeitsprofile festgestellt wurde, kommunizieren die Sendeund Empfangseinheiten in bestimmten Zeitabständen miteinander, die in Abhängigkeit von der Entfernung der beiden miteinander Daten austauschenden Mobilteile bemessen ist.

Vorzugsweise geben die beiden eindeutig miteinander kommunizierenden Mobilteile jeweils ein für den Benutzer wahrnehmbares Signal in Abhängigkeit von der räumlichen Entfernung zwischen den beiden Mobilteilen ab. Das Signal kann beliebig ausgestaltet und beispielsweise optisch, akustisch oder haptisch wahrnehmbar sein, beispielsweise kann das Mobilteil vibrieren, um den Benutzer anzuzeigen, dass sich ein Benutzer mit seinem Wunschprofil in der Nähe befindet, wobei die Stärke und/oder Häufigkeit je Zeiteinheit des Vibrierens bei einer Annäherung der Mobilteile zunimmt.

Ein Mobilteil zur Verwendung in einem oben beschriebenen Kommunikationssystem umfasst mindestens eine Sende- und Empfangseinheit und/oder einen Schalter zur Erstellung der Persönlichkeitsprofile und/oder eine Schnittstelle zur Übertragung von an einem Computer erstellten Daten der Persönlichkeitsprofile. Beispielsweise kann ein Drehschalter zur Auswahl vorgegebener Merkmale vorgesehen sein oder ein mehrfach zu betätigender Tastschalter. Auch die Anordnung sogenannter DIP-Schalter (Dual in-line package-Schalter) ist denkbar, damit der Benutzer des Mobilteils das Persönlichkeitsprofil erstellen kann. Bei einer entsprechenden Gestaltung des Mobilteils können die Schalter selbstverständlich auch Bestandteile einer Tastatur oder eines sogenannten Touch-Screen sein. Zur komfortablen Eingabe der Daten des Persönlichkeitsprofils wird über die Schnittstelle, beispielsweise eine sogenannte USB-Schnittstelle, ein Computer angeschlossen. Hierbei ist zu beachten, dass die Persönlichkeitsprofile auch voreingestellt sein können, so dass das Mobilteil direkt nach dem Kauf in einer Minimalkonfiguration in Betrieb genommen werden kann.

Damit ein Benutzer auch an einem fremden Computer ohne Installationsaufwand ein Persönlichkeitsprofil erstellen und in dem Mobilteil hinterlegen kann, ist vorteilhafterweise in der vorzugsweise wiederbeschreibbaren Speichereinheit ein Programm für die Erstellung oder Modifikation des Persönlichkeitsprofils hinterlegt, welches auf einem oder mehreren handelsüblichen Betriebssystemen gangbar ist.

Zweckmäßigerweise ist mindestens eine Wiedergabeeinrichtung zur optisch und/oder akustisch wahrnehmbaren Ausgabe des Signals und/oder ein Akku für die Energieversorgung integriert, sofern nicht externe Spannungsquellen oder Wiedergabeeinrichtungen verwendet werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:

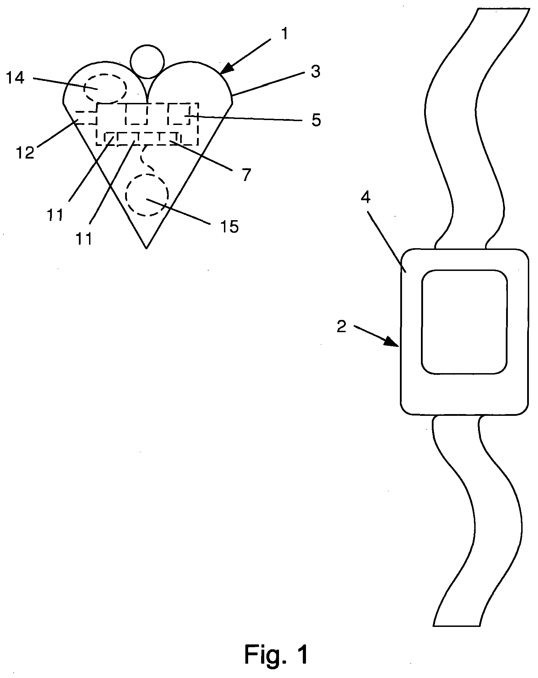

- Fig.1: eine schematische Darstellung von zwei Mobilteilen des erfindungsgemäßen Kommunikationssystems,

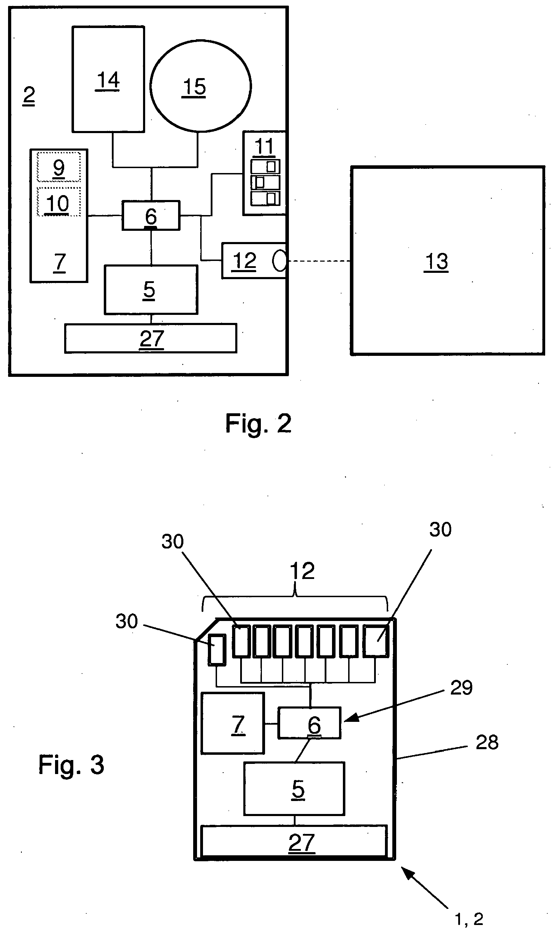

- Fig.2: eine schematische Darstellung des Mobilteils in erster alternativer Ausgestaltung,
- Fig.3: eine schematische Darstellung des Mobilteils in zweiter alternativer Ausgestaltung,

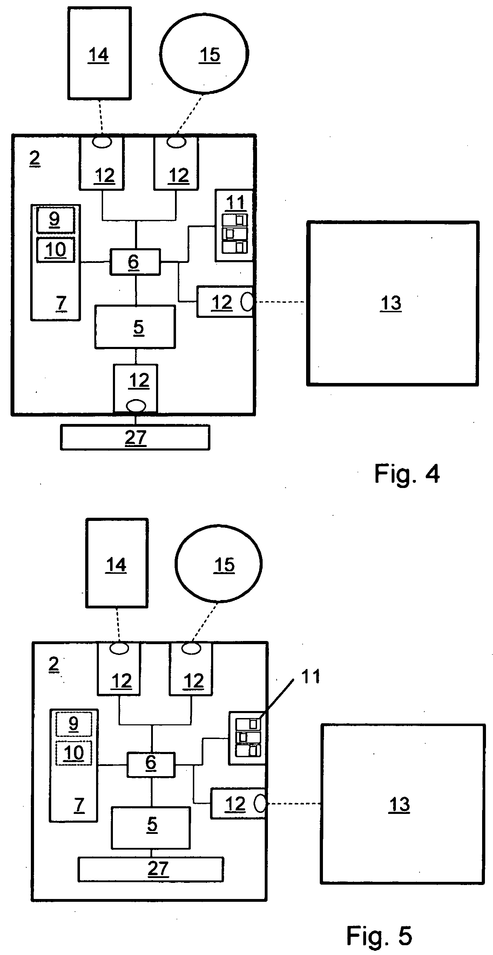

- Fig.4: eine schematische Darstellung des Mobilteils in dritter alternativer Ausgestaltung,
- Fig.5: eine schematische Darstellung des Mobilteils in vierter alternativer Ausgestaltung und

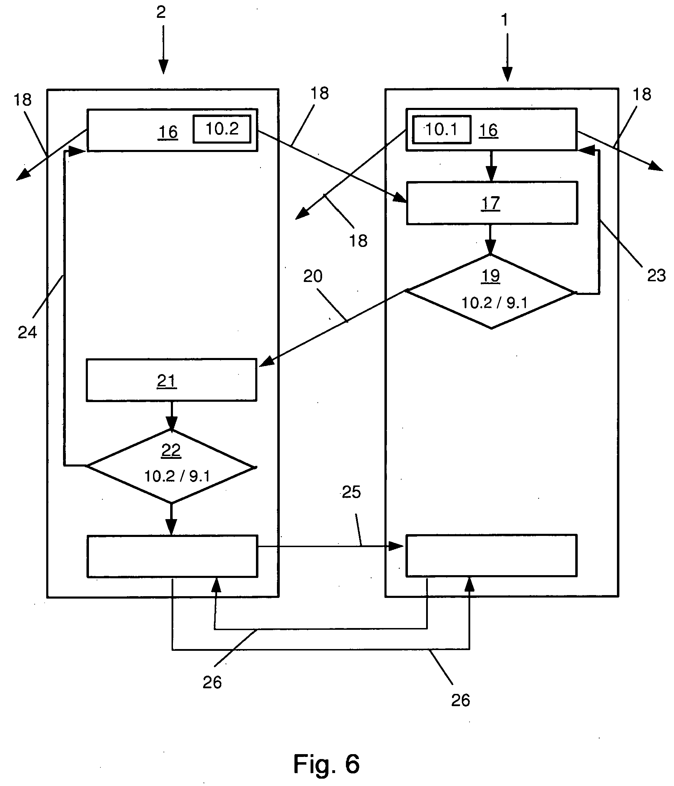

- Fig.6: eine schematische Funktionsdarstellung des Kommunikationssystems nach Fig. 1.

Das Kommunikationssystem umfasst zwei Mobilteile 1, 2 die vorliegend als Schmuckstücke in Form eines Anhängers 3 und einer Armbanduhr 4 ausgebildet sind. Selbstverständlich kann die Integration des Mobilteils 1, 2 in unterschiedlichste Gehäuse oder Geräte, beispielsweise auch ein Smartphone oder dergleichen, erfolgen.

Jedes der Mobilteile 1, 2 umfasst eine Sende- und Empfangseinheit 5 zur Kommunikation mit einem weiteren Mobilteil 1, 2, einen Rechner 6, der mit einer Speichereinheit 7 kommuniziert, in der mindestens zwei individuell zu erstellende Persönlichkeitsprofile 8 hinterlegt sind, die von dem Benutzer des Mobilteils 1 oder 2 individuell erstellt werden. Eines der Persönlichkeitsprofile 8 ist ein den Benutzer beschreibendes Selbstprofil 9 und ein weiteres Persönlichkeitsprofil ist ein Wunschprofil 10, das eine Person beschreibt, die der Benutzer des Mobilteils 1 oder 2 kennenlernen möchte.

Die Sende- und Empfangseinheit 5 ist mittels einer Schalteinrichtung 11 ein- bzw. ausschaltbar und kommuniziert auf einer Radiofrequenz im Nahbereich. Zur Erstellung der Persönlichkeitsprofile 8 sind zwei Schalter 11 vorgesehen, nämlich einer für das Selbstprofil 9 und einer für das Wunschprofil 10. Im Weiteren weist jedes Mobilteil 1, 2 eine Schnittstelle 12 zur Übertragung von an einem Computer 13 erstellten Daten der Persönlichkeitsprofile 8 auf, wobei in der wiederbeschreibbaren Speichereinheit 7 ein Programm für die Erstellung der Persönlichkeitsprofile 8 hinterlegt ist. Zur Energieversorgung jedes Mobilteils 1, 2 ist ein Akku 14 vorgesehen. Darüber hinaus ist jedem Mobilteil 1, 2 eine Wiedergabeeinrichtung 15 zur Ausgabe eines für den Benutzer wahrnehmbaren Signals zugeordnet.

In erster alternativer Ausgestaltung ist das Mobilteil 1, 2 als eine Datenkarte 28 in Form einer SD-Karte ausgebildet, die die Sende- und Empfangseinheit 5, eine Antenne 27 und einen als Mikro-Controller 29 ausgeführten Rechner 6 sowie eine Speichereinheit 7 umfasst. Als Schnittstelle 12 sind der Datenkarte 28 Kontakte 30 zugeordnet, die mit Gegenkontakten eines Kartenlesegerätes zusammenwirken. Über diese Schnittstelle 12 kann die Datenkarte 28 beispielsweise mit einem Personal Computer, einem Laptop, einem Smartphone oder dergleichen zusammenwirken, auf dem zumindest das jeweilige Betriebssystem läuft und beispielsweise dessen Akku und/oder Eingabeeinrichtung und/oder Anzeigeeinrichtung nutzen.

In weiteren alternativen Ausgestaltungen ist das Mobilteil 1, 2 als eine autarke Baueinheit ausgebildet, die über ihre Schnittstelle 12, die beispielsweise als eine USB-Schnittstelle ausgeführt ist, zur Konfiguration und/oder zum Aufladen des Akkus mit dem Computer 13 zu koppeln ist. Das Mobilteil 1, 2 umfasst die interne oder externe Antenne 27, die mit der jeweiligen Sende- und Empfangseinheit 5 verbunden ist. Im Weiteren können neben einer Schnittstelle 12 zum Anschluss des Computers 13 auch Schnittstellen 12 zur Verbindung des Mobilteils 1, 2 mit einem Akku 14 und/oder einer Wiedergabeeinrichtung 15 vorhanden sein.

Im Betrieb, wenn die Mobilteile 1, 2 eingeschaltet sind, sendet gemäß Feld 16 jedes Mobilteil 1, 2 das in ihm gespeicherte Wunschprofil 10.1 bzw. 10.2, wie durch die Pfeile 18 verdeutlicht ist. Das Senden und Empfangen geschieht auf einer gemeinsamen Frequenz zu unterschiedlichen Zeiten, die zufallsgesteuert variieren können, wobei der Empfang eines Wunschprofils 10 durch das Feld 17 dargestellt ist. Ein vorheriger Pairing-Prozess oder dergleichen Datenaustausch zur Legitimation der Kommunikation der miteinander kommunizierenden Mobilteile 1, 2 ist nicht notwendig. Nach dem Empfang des Wunschprofils 10.2 durch das Mobilteil 1 überprüft dieses in Feld 19 ob das empfangene Wunschprofil 10.2 mit dem in dem Mobilteil 1 gespeicherten Selbstprofil 9.1 übereinstimmt, also Wunschprofil 10.2 dem Selbstprofil 9.1 entspricht. Ist dies nicht der Fall, sendet das Mobilteil 1 weiterhin sein Wunschprofil 10.1 in bestimmten, gegebenenfalls unregelmäßigen Zeitabständen, was durch den zurückspringenden Pfeil 23 dargestellt ist.

Entspricht das empfangene Wunschprofil 10.2 dem gespeicherten Selbstprofil 9.1, dann erfolgt eine eindeutig identifizierbare Signalisierung des jetzt sendenden Mobilteils 1, gemäß Pfeil 20, die das Wunschprofil 10.2 umfasst, das das nunmehr empfangende Mobilteil 2 nach Feld 21 als das eigene Wunschprofil 10.2 erkennt und daraufhin zum weiteren Datenempfang bereit ist. Im Weiteren umfasst das gesendete Datenpaket einen Code, beispielsweise in einer mehrstelligen nummerischen oder alphanummerischen Zeichenfolge, und das Wunschprofil 10.1 des nunmehr sendenden Mobilteils 1.

Entspricht gemäß Feld 22 das Wunschprofil 10.1 des nunmehr sendenden Mobilteils 1 nicht dem Selbstprofil 9.2 des jetzt empfangenden Mobilteils 2, dann endet die Kommunikation zwischen beiden Mobilteilen 1, 2 und es erfolgt gemäß Pfeil 24 ein weiteres Senden des eigenen Wunschprofils 10.2, andernfalls sendet das Mobilteil 2, das das letzte Datenpaket empfangen hat, gemäß Pfeil 25 eine Information mit einem Code, der zu seiner Identifizierung zumindest einen Teil des empfangenen Codes umfasst. Dieses nunmehr gesendete Datenpaket signalisiert, dass die beiderseitigen Persönlichkeitsprofile 8 übereinstimmen. Die beiden Mobilteile 1, 2 senden bzw. empfangen denselben Datensatz gemäß den Pfeilen 26 so lange sie in Kontakt stehen und ermitteln hierbei die Distanz zwischen den beiden Mobilteilen 1, 2, wobei die Wiedergabeeinrichtung 15 zur Ausgabe des für den Benutzer des jeweiligen Mobilteils 1, 2 wahrnehmbaren Signals, das sich in Abhängigkeit von der Entfernung zwischen den beiden kommunizierenden Mobilteilen 1, 2 verändert, entsprechend angesteuert wird.

Die Persönlichkeitsprofile 8 können beispielsweise die Merkmale Geschlecht, Alter, Größe, Gewicht, Sternzeichen, Schul- bzw. Ausbildung und/oder Postleitzahl oder weitere Merkmale umfassen, die die entweder konkret auswählbar, oder beispielsweise durch Zahlen oder Bereichsangaben beschreibbar sind. Die Merkmale können auch unbestimmt bleiben, wenn sie für einen Benutzer unwichtig erscheinen.

Mit dem vorliegenden Kommunikationssystem ist aufgrund der Ausgestaltung der Sende- und Empfangseinrichtungen 5 der Mobilteile 1, 2 bzw. dem Senden des den Code und das Wunschprofil 10.1 des sendenden Mobilteils 1 umfassenden Datenpakets eine Kommunikation unter Mobilteilen 1, 2 möglich, die vor der Kommunikation nicht miteinander verbunden sind.

**Bezugszeichenliste**

| | | | |
|---|---|---|---|
| 1. | Mobilteil | 16. | Feld |
| 2. | Mobilteil | 17. | Feld |
| 3. | Anhänger | 18. | Pfeil |
| 4. | Armbanduhr | 19. | Feld |
| 5. | Sende- und Empfangseinheit | 20. | Pfeil |
| | | 21. | Feld |
| 6. | Rechner | 22. | Feld |
| 7. | Speichereinheit | 23. | Pfeil |
| 8. | Persönlichkeitsprofil | 24. | Pfeil |
| 9. | Selbstprofil | 25. | Pfeil |
| 10. | Wunschprofil | 26. | Pfeil |
| 11. | Schalter | 27. | Antenne |
| 12. | Schnittstelle | 28. | Datenkarte |
| 13. | Computer | 29. | Mikro-Controller |
| 14. | Akku | 30. | Kontakte |
| 15. | Wiedergabeeinrichtung | | |

## Patentansprüche

1. Kommunikationssystem mit mindestens zwei Mobilteilen (1, 2), denen zur unmittelbaren Kommunikation miteinander jeweils eine Sende- und Empfangseinheit (5) zugeordnet ist, die mit einem Rechner (6) und mit einer Speichereinheit (7) kommuniziert, in der mindestens zwei individuell zu erstellende Persönlichkeitsprofile (8) hinterlegbar sind, von denen jeweils ein erstes Persönlichkeitsprofil (8), das einem eine Person beschreibenden ersten Wunschprofil (10) des Benutzers des jeweiligen Mobilteils (1, 2) entspricht, gesendet und ein weiteres Persönlichkeitsprofil (8), das einem eine Person beschreibenden Wunschprofil (10) des Benutzers eines weiteren Mobilteils (1, 2) entspricht, empfangen wird, wobei das jeweils empfangene Wunschprofil mit einem Persönlichkeitsprofil (8), das einem den Benutzer des jeweiligen Mobilteils (1, 2) beschreibenden Selbstprofil (9) entspricht, verglichen wird und bei einer Übereinstimmung von empfangenem Wunschprofil (10) mit dem gespeicherten Selbstprofil (9) eine eindeutig identifizierbare Signalisierung zwischen den entsprechenden Mobilteilen (1, 2) erfolgt, wobei eine selbsttätige Kommunikation der Mobilteile ohne Benutzerinteraktion allein aufgrund der Ausgestaltung der Sende- und Empfangseinheiten und/oder übertragener Daten erfolgt, **dadurch gekennzeichnet, dass** bei einer Übereinstimmung des empfangenen Wunschprofils (10.2) mit dem gespeicherten Selbstprofil (9.1) das erkennende erste Mobilteil (1) das empfangene Wunschprofil (10.2) gemeinsam mit einer Signatur, die das gesendete Wunschprofil (10.2) des zweiten Mobilteils (2) und das Wunschprofil (10.1) des ersten Mobilteils (1) umfasst, mit seiner Sende- und Empfangseinheit (5) sendet, wobei das weitere zweite Mobilteil (2) Mittel umfasst, um das empfangene eigene Wunschprofil (10.2) mit dem gespeicherten Wunschprofil (10.2) zu vergleichen, bei einer Übereinstimmung das empfangene Wunschprofil (10.1) von dem ersten Mobilteil (1) mit dem gespeicherten zweiten Selbstprofil (9.2) zu vergleichen und in Abhängigkeit von dem Vergleich mit dem ersten Mobilteil (1) eindeutig kommuniziert oder keine Antwort an das erste Mobilteil (1) sendet, wobei das Selbstprofil (9) nicht durch die Sende- und Empfangseinheit (5) an ein anderes Mobilteil (1, 2) übertragbar ist.

2. Kommunikationssystem nach Anspruch 1, **dadurch gekennzeichnet, dass** eine an das erste Mobilteil (1) gerichtete Antwort des zweiten Mobilteils (2) einen eindeutigen Code sowie zumindest einen Teil der Signatur des ersten Mobilteils (1) umfasst, wobei das erste Mobilteil (1) das zweite Mobilteil (2) anhand des empfangenen Teils der Signatur eindeutig erkennt.

3. Kommunikationssystem nach Anspruch 1, **dadurch gekennzeichnet, dass** die Sende- und Empfangseinheit (5) einund ausschaltbar ist und insbesondere auf einer Radiofrequenz im Nahbereich Daten sendet und empfängt.

4. Kommunikationssystem nach Anspruch 1 oder 3, **dadurch gekennzeichnet, dass** das Mobilteil (1, 2) als eine Datenkarte ausgebildet ist, die die Sende- und Empfangseinheit (5) und/oder eine Antenne und/oder einen Mikro-Controller umfasst, wobei die Datenkarte in einen Kartenleser, insbesondere eines Smartphones, einsetzbar ist, der zumindest mit einem Akku zur Spannungsversorgung, und/oder einem zentralen Hauptrechner gekoppelt ist.

5. Kommunikationssystem nach einem der Ansprüche 1 bis 4, **dadurch gekennzeichnet, dass** die Sende- und Empfangseinheiten (5) in bestimmten Zeitabständen miteinander kommunizieren, die in Abhängigkeit von der räumlichen Entfernung der beiden miteinander Daten austauschenden Mobilteile (1,2) bemessen ist.

6. Kommunikationssystem nach einem der Ansprüche 1 bis 5, **dadurch gekennzeichnet, dass** die beiden eindeutig miteinander kommunizierenden Mobilteile (1, 2) jeweils ein für den Benutzer wahrnehmbares Signal in Abhängigkeit von der Entfernung zwischen den beiden Mobilteilen (1, 2) abgeben.

7. Mobilteil zur Verwendung in einem Kommunikationssystem nach Anspruch 1, das mindestens eine Sende- und Empfangseinheit (5) und eine Speichereinheit (7) umfasst, wobei die Sende- und Empfangseinheit (5) mit einem Rechner (6) und mit der Speichereinheit (7) kommuniziert, in der mindestens zwei mit einem Schalter (11) individuell zu erstellende Persönlichkeitsprofile (8) hinterlegbar sind, von denen ein erstes Persönlichkeitsprofil (8) einem eine Person beschreibenden ersten Wunschprofil (10) des Benutzers des Mobilteils (1, 2) entspricht und ein weiteres Persönlichkeitsprofil (8) einem eine Person beschreibenden Wunschprofil (10) des Benutzers eines weiteren Mobilteils (1, 2) entspricht, wobei das jeweils empfangene Wunschprofil mit einem Persönlichkeitsprofil (8), das einem den Benutzer des jeweiligen Mobilteils (1, 2) beschreibenden Selbstprofil (9) entspricht, vergleichbar ist und bei einer Übereinstimmung von empfangenem Wunschprofil (10) mit dem gespeicherten Selbstprofil (9) eine eindeutig identifizierbare Signalisierung zwischen entsprechenden Mobilteilen (1, 2) erfolgt, wobei eine selbsttätige Kommunikation der Mobilteile ohne Benutzerinteraktion allein aufgrund der Ausgestaltung der Sende- und Empfangseinheit und/oder übertragener Daten erfolgt, wobei die Sende- und Empfangseinheit (5) des Mobilteils (1, 2) bei einer Übereinstimmung des empfangenen Wunschprofils (10.2) mit dem gespeicherten Selbstprofil (9.1) des Mobilteil (1) das empfangene Wunschprofil (10.2) gemeinsam mit einer Signatur, die das gesendete Wunschprofil (10.2) eines zweiten Mobilteils (2) und das Wunschprofil (10.1) des Mobilteils (1) umfasst, sendet, und Mittel umfasst, um das empfangene eigene Wunschprofil (10.2) mit dem gespeicherten Wunschprofil (10.2) zu vergleichen, bei einer Übereinstimmung das empfangene Wunschprofil (10.1) mit dem gespeicherten zweiten Selbstprofil (9.2) zu vergleichen und in Abhängigkeit von dem Vergleich eindeutig zu kommunizieren oder keine Antwort zu senden, wobei das Selbstprofil (9) nicht durch die Sende- und Empfangseinheit (5) an ein anderes Mobilteil (1, 2) übertragbar ist.

8. Mobilteil nach Anspruch 7, **dadurch gekennzeichnet, dass** in der vorzugsweise wiederbeschreibbaren Speichereinheit (7) ein Programm für die Erstellung oder Modifikation des Persönlichkeitsprofils (8) hinterlegt ist.

9. Mobilteil nach Anspruch 7, **dadurch gekennzeichnet, dass** mindestens eine Wiedergabeeinrichtung (15) zur optisch und/oder akustisch wahrnehmbaren Ausgabe eines Signals und/oder ein Akku (14) für die Energieversorgung integriert ist.

## Claims

1. Communication system having at least two mobile parts (1, 2) that each have, for the purpose of direct communication with one another, an associated transmission and reception unit (5) that communicates with a computer (6) and with a memory unit (7) that can be used to store at least two individually creatable personality profiles (8), of which a respective first personality profile (8), which corresponds to a first requirement profile (10), describing a person, of the user of the respective mobile part (1, 2), is sent and a further personality profile (8), which corresponds to a requirement profile (10), describing a person, of the user of a further mobile part (1, 2), is received, wherein the respectively received requirement profile is compared with a personality profile (8) that corresponds to a self-profile (9) describing the user of the respective mobile part (1, 2), and a match between received requirement profile (10) and the stored self-profile (9) prompts explicitly identifiable signalling between the corresponding mobile parts (1, 2), wherein automatic communication by the mobile parts without user interaction is effected solely on the basis of the embodiment of the transmission and reception units and/or of transmitted data, **characterized in that** a match between the received requirement profile (10.2) and the stored self-profile (9.1) prompts the identifying first mobile part (1) to send the received requirement profile (10.2) together with a signature, which comprises the sent requirement profile (10.2) of the second mobile part (2) and the requirement profile (10.1) of the first mobile part (1), using its transmission and reception unit (5), wherein the further, second mobile part (2) comprises means in order to compare the received requirement profile (10.2) of its own with the stored requirement profile (10.2) and to compare the received requirement profile (10.1) from the first mobile part (1) with the stored second self-profile (9.2) in the event of a match, and takes the comparison as a basis for explicitly communicating with the first mobile part (1) or not sending a response to the first mobile part (1), wherein the self-profile (9) cannot be transmitted to another mobile part (1, 2) by the transmission and reception unit (5).

2. Communication system according to Claim 1, **characterized in that** a response sent to the first mobile part (1) from the second mobile part (2) comprises an explicit code and also at least one part of the signature of the first mobile part (1), wherein the first mobile part (1) explicitly identifies the second mobile part (2) on the basis of the received part of the signature.

3. Communication system according to Claim 1, **characterized in that** the transmission and reception unit (5) can be switched on and off and, in particular, sends and receives data on a radio frequency at close range.

4. Communication system according to Claim 1 or 3, **characterized in that** the mobile part (1, 2) is in the form of a data card that comprises the transmission and reception unit (5) and/or an antenna and/or a microcontroller, wherein the data card can be inserted into a card reader, particularly of a smartphone, that is coupled at least to a storage battery for supplying power, and/or to a central main computer.

5. Communication system according to one of Claims 1 to 4, **characterized in that** the transmission and reception units (5) communicate with one another at particular intervals of time that are proportioned on the basis of the physical distance between the two mobile parts (1, 2) interchanging data with one another.

6. Communication system according to one of Claims 1 to 5, **characterized in that** the two mobile parts (1, 2) explicitly communicating with one another each output a signal, which is perceptible to the user, on the basis of the distance between the two mobile parts (1, 2).

7. Mobile part for use in a communication system according to Claim 1, which comprises at least one transmission and reception unit (5) and a memory unit (7), wherein the transmission and reception unit (5) communicates with a computer (6) and with the memory unit (7) that can be used to store at least two personality profiles (8) that can be individually created with a switch (11), of which a first personality profile (8) corresponds to a first requirement profile (10), describing a person, of the user of the mobile part (1, 2) and a further personality profile (8) corresponds to a requirement profile (10), describing a person, of the user of a further mobile part (1, 2), wherein the respectively received requirement profile can be compared with a personality profile (8) that corresponds to a self-profile (9) describing the user of the respective mobile part (1, 2), and a match between received requirement profile (10) and the stored self-profile (9) prompts explicitly identifiable signalling between corresponding mobile parts (1, 2), wherein automatic communication by the mobile parts without user interaction is effected solely on the basis of the embodiment of the transmission and reception unit and/or of transmitted data, wherein the transmission and reception unit (5) of the mobile part (1, 2), in the event of a match between the received requirement profile (10.2) and the stored self-profile (9.1) of the mobile part (1), sends the received requirement profile (10.2) together with a signature, which comprises the sent requirement profile (10.2) of a second mobile part (2) and the requirement profile (10.1) of the mobile part (1), and comprises means in order to compare the received requirement profile (10.2) of its own with the stored requirement profile (10.2), to compare the received requirement profile (10.1) with the stored second self-profile (9.2) in the event of a match and to take the comparison as a basis for explicitly communicating or not sending a response, wherein the self-profile (9) cannot be transmitted to another mobile part (1, 2) by the transmission and reception unit (5).

8. Mobile part according to Claim 7, **characterized in that** the preferably rewritable memory unit (7) stores a program for creating or modifying the personality profile (8).

9. Mobile part according to Claim 7, **characterized in that** at least one reproduction device (15) for the visually and/or audibly perceptible output of a signal and/or a storage battery (14) for supplying power is/are integrated.

## Revendications

1. Système de communication comportant au moins deux parties mobiles (1, 2) auxquelles est respectivement associée une unité d'émission-réception (5) à des fins de communication directe, laquelle unité communique avec un ordinateur (6) et une unité à mémoire (7) dans laquelle peuvent être stockés au moins deux profils de personnalité (8) devant être établis individuellement, parmi lesquels respectivement un premier profil de personnalité (8) respectif qui correspond à un premier profil souhaité (10) décrivant une personne de l'utilisateur de la partie mobile respective (1, 2) est envoyé et un autre profil de personnalité (8) qui correspond à un profil souhaité (10) décrivant une personne de l'utilisateur d'une autre partie mobile (1, 2) est reçu, dans lequel le profil souhaité respectivement reçu est comparé à un profil de personnalité (8) qui correspond à un profil propre (9) décrivant l'utilisateur de la partie mobile respective (1, 2) et une signalisation identifiable de manière unique est effectuée entre les parties mobiles correspondantes (1, 2) lors d'une concordance entre le profil souhaité reçu (10) et le profil propre stocké (9), dans lequel une communication automatique des parties mobiles sans interaction de l'utilisateur est effectuée uniquement sur la base de la configuration des unités d'émission-réception et/ou des données transmises, **caractérisé en ce que**, lors d'une concordance entre le profil souhaité reçu (10.2) et le profil propre stocké (9.1), la première partie mobile qui effectue l'identification (1) envoie le profil souhaité reçu (10.2) en association avec une signature qui comprend le profil souhaité envoyé (10.2) de la seconde partie mobile (2) et le profil souhaité (10.1) de la première partie mobile (1) au moyen de son unité d'émission-réception (5), dans lequel l'autre seconde partie mobile (2) comprend des moyens destinés à comparer le profil souhaité propre (10.2) reçu au profil souhaité stocké (10.2) et, lors d'une concordance, à comparer le profil souhaité reçu (10.1) de la première partie mobile (1) au second profil propre stocké (9.2) et, selon la comparaison, communique de manière unique avec la première partie mobile (1) ou n'envoie aucune réponse à la première partie mobile (1), dans lequel le profil propre (9) ne peut pas être transmis par l'intermédiaire de l'unité d'émission-réception (5) à une autre partie mobile (1, 2).

2. Système de communication selon la revendication 1, **caractérisé en ce qu'**une réponse de la seconde partie mobile (2) destinée à la première partie mobile (1) comprend un code unique ainsi qu'au moins une partie de la signature de la première partie mobile (1), dans lequel la première partie mobile (1) identifie de manière unique la seconde partie mobile (2) sur la base de la partie reçue de la signature.

3. Système de communication selon la revendication 1, **caractérisé en ce que** l'unité d'émission-réception (5) peut être activée et désactivée et émet et reçoit plus particulièrement des données à faible distance sur une fréquence radio.

4. Système de communication selon la revendication 1 ou 3, **caractérisé en ce que** la partie mobile (1, 2) est réalisée sous la forme d'une carte de données qui comprend l'unité d'émission-réception (5) et/ou une antenne et/ou un microcontrôleur, dans lequel la carte de données peut être insérée dans un lecteur de carte, notamment d'un téléphone intelligent qui est couplé au moins à un accumulateur à des fins d'alimentation en tension et/ou à un ordinateur central.

5. Système de communication selon l'une quelconque des revendications 1 à 4, **caractérisé en ce que** les unités d'émission-réception (5) communiquent les unes avec les autres à des intervalles de temps déterminés qui sont mesurés en fonction de l'éloignement spatial des deux parties mobiles (1, 2) échangeant des données l'une avec l'autre.

6. Système de communication selon l'une quelconque des revendications 1 à 5, **caractérisé en ce que** les deux parties mobiles (1, 2) communiquant de manière unique l'une avec l'autre délivrent un signal perceptible par l'utilisateur en fonction de l'éloignement entre les deux parties mobiles (1, 2).

7. Partie mobile destinée à être utilisée dans un système de communication selon la revendication 1, qui comprend au moins une unité d'émission-réception (5) et une unité à mémoire (7), dans lequel l'unité d'émission-réception (5) communique avec un ordinateur (6) et avec l'unité à mémoire (7) dans laquelle peuvent être stockés au moins deux profils de personnalité (8) devant être établis individuellement au moyen d'un commutateur (11), parmi lesquels un premier profil de personnalité (8) correspond à un premier profil souhaité décrivant une personne (10) de l'utilisateur de la partie mobile (1, 2) et un autre profil de personnalité (8) correspond à un profil souhaité décrivant une personne (10) de l'utilisateur d'une autre partie mobile (1, 2), dans lequel le profil souhaité respectivement reçu peut être comparé à un profil de personnalité (8) qui correspond à un profil propre (9) décrivant l'utilisateur de la partie mobile respective (1, 2) et, lors d'une concordance entre le profil souhaité reçu (10) et le profil propre stocké (9), une signalisation identifiable de manière unique est effectuée entre les parties mobiles correspondantes (1, 2), dans lequel une communication automatique des parties mobiles sans interaction de l'utilisateur est effectuée uniquement sur la base de la configuration de l'unité d'émission-réception et/ou des données transmises, dans lequel, lors d'une concordance entre le profil souhaité reçu (10.2) et le profil propre stocké (9.1) de la partie mobile (1), l'unité d'émission-réception (5) de la partie mobile (1, 2) envoie le profil souhaité reçu (10.2) en association avec une signature qui comprend le profil souhaité envoyé (10.2) d'une seconde partie mobile (2) et le profil souhaité (10.1) de la partie mobile (1), et comprend des moyens destinés à comparer le profil souhaité propre reçu (10.2) au profil souhaité stocké (10.2) et à comparer, lors d'une concordance, le profil souhaité reçu (10.1) au second profil propre stocké (9.2) et, selon la comparaison, à communiquer de manière unique ou à ne pas envoyer de réponse, dans lequel le profil propre (9) ne peut pas être transmis par l'unité d'émission-réception (5) à une autre partie mobile (1, 2).

8. Partie mobile selon la revendication 7, **caractérisée en ce qu'**un programme destiné à l'établissement ou à la modification du profil de personnalité (8) est stocké dans l'unité à mémoire de préférence réinscriptible (7).

9. Partie mobile selon la revendication 7, **caractérisée en ce qu'**au moins un dispositif de reproduction (15) destiné à délivrer de façon optiquement et/ou acoustiquement perceptible un signal ou **en ce qu'**un accumulateur (14) destiné à l'alimentation en énergie est/ou intégré(s).
